# EUROPEAN PATENT APPLICATION

(11) **EP 0 722 232 A1**
(43) Date of publication of application: **17.07.1996**
(21) Application number: 96200025.3
(22) Date of filing: 05.01.1996
(51) Int. Cl.: H04B 10/17, H04B 10/18, H01S 3/06

(54) **Optical transmission system with remotely pumped optical amplifiers**

(30) Priority: 13.01.1995 NL 9500069
(71) Applicant: Koninklijke PTT Nederland N.V., NL-2509 CH The Hague (NL)
(72) Inventor: Tan, Han Hiong, NL-2651 VD Berkel en Rodenrijs (NL)

(57) **Abstract**

Optical transmission system in which Erbium Doped Fibre Amplifiers (EDFAs) present in a 'curb' are supplied remotely by a pump laser signal. By composing the supply signal of various signals with mutually close-lying wavelengths, Stimulated Brillouin Scattering (SBS) is avoided, due to which it was not possible to supply EDFAs remotely up to now.

## Description

### A. Background of the invention

The invention relates to an optical transmission system, including a central distribution point and a local distribution point with optical amplifiers which are supplied by an optical supply source. An optical subscriber network in which, from a central point, optical fibres lead to a distributor ('curb') in which splitters and optical amplifiers are located, is thought of as an example. EDFAs (Erbium Doped Fibre Amplifiers), consisting of a piece of Erbium-doped glass fibre, to which the signal to be amplified and a supply signal are presented via a coupler, could well be used as amplifiers. The supply signal is generated in a pump laser. The supply signal has a wavelength which is only slightly less than the wavelength of the signal carrier. The amplifier pump lasers are preferably placed in the distributor at the central point. Unfortunately the power required by the amplifiers is so high (approx. 100 mW) that the pump signals cannot be transferred by the supply fibres between the central point and the distributor. The quite large length of the fibres combined with the large pump power values cause 'Stimulated Brillouin Scattering' (SBS).

### B. Summary of the invention

The present invention is based on the insight that, on transferring relatively large power levels over a relatively large distance, SBS does not occur if the supply signal is divided into a number of supply signals which, within a certain range of wavelength, each have different wavelengths. The invention is further based on the insight that EDFAs are not very critical as far as the wavelength of the supply signal is concerned. It has been shown that EDFAs which are included in a transmission system having a carrier wavelength of 1550 nm and are normally supplied with a supply signal having a wavelength of 1480 nm, function just as well if they are supplied by a number of supply signals -- to be transferred via the same fibre --lying in the range of about 1480 nm but which have a mutual wavelength distance of about 20 to 100 MHz in order to prevent the said SBS. For example, 10 supply signals separated in this way, each having a power level of 10 mW, are used. In that way a power level of 100 mW can still be transferred, without SBS. The supply sources are lasers, for example, which each output 100 mW -- each having a sufficiently different wavelength -- to an optical NxN splitter which on the one hand merges the 10 supply signals to 10 wavelengths D1...D10 with a total of 10x100 mW, and on the other hand splits said signals into 10 supply signals, each comprising 10 wavelengths D1...D10 and each having a power level of 10 mW, so that the total power per supply signal is 100 mW.

### C. Exemplary embodiment

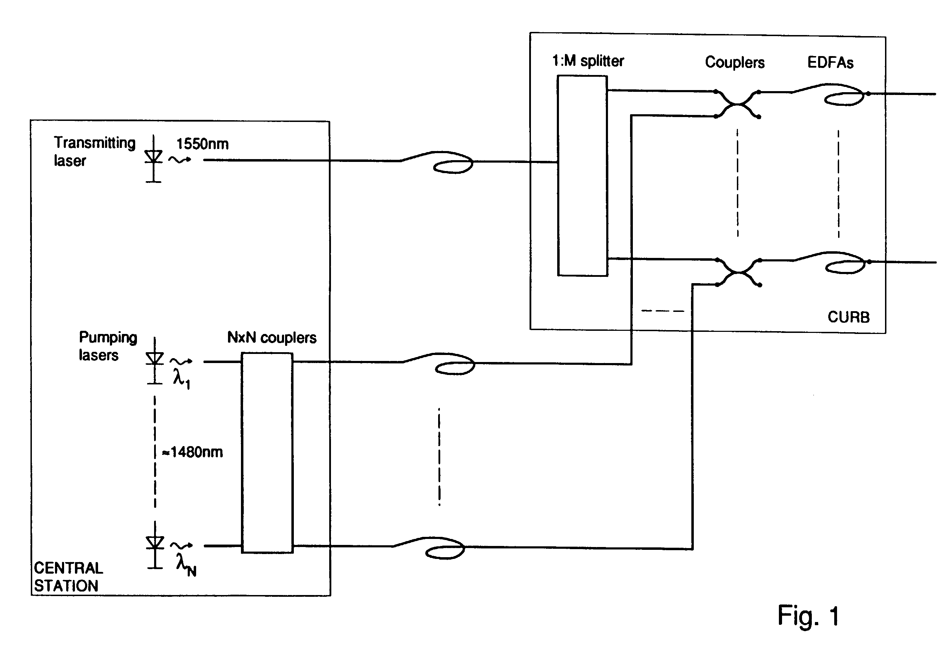

Figure 1 shows an exemplary embodiment of the invention. In a signal distributor ('curb'), an information modulated optical signal, originating from a central station and having a wavelength of 1550 nm, is distributed by means of a splitter over M outputs which lead, for example, to M subscriber stations. To amplify these M signals, M EDFAs are used which, via M optical couplers, are supplied by an optical supply signal of approx. 1480 nm. In order to prevent 'scattering' (SBS), the supply signal is comprised of N signals having a wavelength of about 1480 nm, although always with a mutual wavelength difference of 0.1 GHz (dependent upon the fibre properties, this difference may be even less in practice, to approx. 0.01 GHz). In the table below, the laser wavelengths and laser frequencies are given for a number of pump lasers (16).

| | | |
|---|---|---|
| Pumping laser 1 | 1=1479.992 nm | f=135135.8 GHz |
| Pumping laser 2 | 1=1479.993 nm | f=135135.7 GHz |
| Pumping laser 3 | 1=1479.995 nm | f=135135.6 GHz |
| Pumping laser 4 | 1=1479.996 nm | f=135135.5 GHz |
| Pumping laser 5 | 1=1479.997 nm | f=135135.4 GHz |
| Pumping laser 6 | 1=1479.998 nm | f=135135.3 GHz |
| Pumping laser 7 | 1=1479.999 nm | f=135135.2 GHz |
| Pumping laser 8 | 1=1480.000 nm | f=135135.1 GHz |
| Pumping laser 9 | 1=1480.001 nm | f=135135.0 GHz |
| Pumping laser 10 | 1=1480.002 nm | f=135134.9 GHz |
| Pumping laser 11 | 1=1480.003 nm | f=135134.8 GHz |
| Pumping laser 12 | 1=1480.004 nm | f=135134.7 GHz |
| Pumping laser 13 | 1=1480.005 nm | f=135134.6 GHz |
| Pumping laser 14 | 1=1480.007 nm | f=135134.5 GHz |
| Pumping laser 15 | 1=1480.008 nm | f=135134.4 GHz |
| Pumping laser 16 | 1=1480.009 nm | f=135134.3 GHz |

The supply signals generated by the various pump lasers -- each having a power level of 100 mW for example -- are unified with each other in an NxN coupler (total power N x 100 mW) and subsequently split into a number of supply signals to which each pump laser supplied its contribution. The power level of each of those supply signals is again 100 mW, comprised of N signals of various wavelength each having a power level of 100/N mW.

### D. References

None.

## Claims

1. Optical transmission system, including a central distribution point and a local distribution point with optical amplifiers which are supplied by an optical supply source, characterised in that said optical supply source outputs a supply signal which comprises signals of various wavelengths.

2. Optical transmission system according to Claim 1, characterised in that said signals maintain a mutual frequency distance of at least 10 MHz from each other.

3. Optical transmission system according to Claim 1, characterised in that the power level of said signals of various wavelength is mainly equal.

4. Optical transmission system according to Claim 1, characterised in that said supply source is formed by a series of optical signal generators which output optical signals of mutually varying wavelength, said optical signals being applied to the inputs of an NxN coupler which unifies the applied signals and distributes the unified signal over its outputs, in which each of the said optical amplifiers are connected to one of the outputs of the NxN coupler.
